# FASCICULE DE BREVET EUROPEEN

(11) **EP 1 308 662 B1**
(45) Date de publication et mention de la délivrance du brevet: **17.11.2004**
(21) Numéro de dépôt: 02356217.6
(22) Date de dépôt: 30.10.2002
(51) Int. Cl.: F16L 37/092

(54) **Raccord instantané démontable pour au moins un tube**
Lösbare Schnellkupplung für mindestens eine Rohrleitung
Quick-acting disconnectable coupling for at least one tube

(30) Priorité: 31.10.2001 FR 0114155
(43) Date de publication de la demande: 07.05.2003
(73) Titulaire: COMAP, F-69008 Lyon (FR)
(72) Inventeur: Le Cinche, Pascal, 69008 Lyon (FR)
(74) Mandataire: Maureau, Philippe

(56) Documents cités:
- EP-A- 0 447 723
- US-A- 2 423 632
- US-A- 3 097 866

## Description

La présente invention a pour objet un raccord instantané démontable pour au moins un tube, notamment un tube en matériau thermoplastique ou en matériau composite, comprenant une âme métallique, par exemple en aluminium, revêtue de couches de matière synthétique. Ce raccord sert à réaliser la liaison entre plusieurs tubes ou entre un tube et un appareil, tel qu'un robinet ou un collecteur. Il s'agit de raccord pour des tubes servant notamment au transport de fluides domestiques.

Les raccords instantanés pour tubes sont connus de longue date.

Un tel raccord est connu par le document EP 0 021 795. Dans le raccord décrit dans ce document, chaque tube est inséré dans le raccord, l'étanchéité étant réalisée par un joint torique à l'extérieur du tube, et la retenue étant réalisée à l'aide d'une bague en matière synthétique présentant des bras radiaux équipés de griffes faisant saille vers l'intérieur.

Un tel raccord présente un certain nombre d'inconvénients ; le joint torique n'étant pas maintenu dans une gorge, il existe des risques de déplacement du tube et du joint à la façon d'un piston lors de pression cyclique du fluide ou de coups de bélier.

Le guidage de la bague de retenue est de mauvaise qualité car elle est encliquetée dans un logement réalisé dans le corps du raccord, avec un jeu important. Enfin, dans le cas d'un raccordement avec un tube de matière synthétique ou composite, les griffes de la bague de retenue du tube risquent de rester planté dans la matière et de rendre le raccord difficilement démontable.

Le document WO 9607048 concerne un raccord comportant un joint et une bague d'accrochage situés à l'extérieur du tube. Il faut noter que dans ce raccord la bague d'accrochage vient comprimer axialement le joint d'étanchéité, ce phénomène pouvant être aggravé dans la mesure où la bague d'accrochage est entraînée par le tube pendant la connexion. Or cette compression axiale du joint d'étanchéité rend difficile l'introduction du tube dans le raccord.

Un raccord similaire au sujet de la revendication 1 est décrit dans le document EP-A-0 447 723.

Le but de l'invention est de fournir un raccord instantané permettant un démontage du tube, qui soit réalisé de façon compacte et simple en comportant un faible nombre de composants, et qui soit économique à réaliser.

Il est en effet important, lorsqu'une installation a été réalisée de permettre à l'installateur de démonter un raccord s'il a effectué une erreur. Il est également intéressant de pouvoir effectuer un montage à blanc, c'est-à-dire de positionner les tubes vis à vis des différents raccords auxquels ils sont destinés à être associés, sans que l'accrochage des tubes soit immédiatement réalisé.

A cet effet, le raccord qu'elle concerne comprend :
- un corps rigide comportant, pour le raccordement de chaque tube, une partie tubulaire de diamètre correspondant au diamètre intérieur du tube, dans laquelle est ménagée au moins une gorge périphérique servant de logement à un joint destiné à assurer l'étanchéité avec l'intérieur du tube, et une collerette destinée à servir de butée à l'extrémité du tube lors de l'introduction de celui-ci sur la partie tubulaire,
- une coiffe de diamètre intérieur correspondant au diamètre extérieur du tube, montée sur la partie tubulaire du corps et délimitant avec celle-ci une chambre servant au logement d'une bague d'accrochage du tube, contrainte vers la position d'accrochage lors d'un déplacement du tube dans le sens de dégagement hors du raccord, la coiffe présentant au niveau de chaque bague d'accrochage au moins une fenêtre permettant le passage d'un outil agissant sur la bague pour l'immobiliser axialement en position de manipulation du tube, c'est-à-dire lors du montage ou du démontage du tube, ou pour l'immobiliser en position montée, chaque bague d'accrochage comprenant en outre un corps cylindrique à partir duquel s'étendant axialement plusieurs dents séparées les unes des autres par des fentes, chaque dent comportant, à son extrémité libre, d'une part une face extérieure inclinée de l'extérieur vers l'intérieur et de l'arrière vers l'avant, destinée à coopérer avec une surface d'inclinaison complémentaire de la coiffe, et d'autre part, du côté intérieur, au moins une arête destinée à pénétrer dans la surface extérieure de la paroi du tube à raccorder, et le corps de la bague d'accrochage comporte un épaulement annulaire à partir duquel s'étendent vers l'arrière des plots destinés à venir prendre appui contre la collerette du corps.

Après engagement d'un tube dans le raccord, entre le corps et la coiffe de celui-ci, l'accrochage est réalisé par la bague en exerçant une légère traction sur le tube, cette traction provoquant un resserrement de la bague qui immobilise axialement le tube dans le raccord. Pour procéder au démontage du raccord, le tube est repoussé vers l'intérieur du raccord jusqu'à ce que son extrémité vienne en butée à l'intérieur du raccord, un outil traversant une fenêtre ménagée dans la coiffe permettant alors d'immobiliser axialement la bague d'accrochage dans une position dans laquelle elle n'immobilise pas le tube, permettant ainsi le retrait de celui-ci.

Lorsque après introduction du tube à l'intérieur du raccord, on exerce une traction sur le tube dans un sens de dégagement de celui-ci, la bague se déplace avec le tube, et les dents de la bague, contraintes radialement vers l'intérieur par appui contre la face intérieure de la coiffe, réalise un rapprochement des arêtes qui empêche tout retrait du tube hors du raccord.

L'épaulement annulaire peut servir au blocage axial de la bague par un outil traversant une fenêtre.

Selon une forme d'exécution de ce raccord, chaque fenêtre ménagée dans la coiffe s'étend axialement sensiblement depuis la collerette du corps jusqu'au-delà de l'épaulement de la bague d'accrochage, lorsque les plots de celle-ci sont en appui contre la collerette. L'épaulement de la bague se trouve donc dans la zone d'une fenêtre, en position reculée de la bague, ce qui permet, pour réaliser le démontage d'un tube, d'introduire un outil entre l'épaulement et le bord de la fenêtre situé du côté extérieur du raccord.

Selon une première possibilité, l'outil destiné à agir à travers une fenêtre sur la bague d'accrochage est un outil extérieur tel qu'un tournevis dont l'extrémité prend appui contre l'épaulement annulaire, pour agir sur la bague d'accrochage.

Selon une autre possibilité, l'outil destiné à agir à travers une fenêtre sur la bague d'accrochage est constitué par un cavalier destiné à venir entourer au moins partiellement la coiffe et comportant un doigt tourné vers l'intérieur, pénétrant dans une fenêtre pour s'engager entre l'épaulement de la bague d'accrochage et le bord de la fenêtre situé du côté de l'extrémité libre du raccord. Chaque cavalier étant réalisé en matière synthétique déformable élastiquement pour permettre sa mise en place et son retrait vis à vis de la coiffe, peut être engagé sur la coiffe et se maintient automatiquement dans la position de blocage axial de la bague permettant le retrait du tube.

Selon une possibilité, l'outil destiné à agir à travers une fenêtre sur la bague d'accrochage est constitué par un cavalier destiné à venir entourer au moins partiellement la coiffe et comportant un doigt tourné vers l'intérieur, pénétrant dans une fenêtre pour s'engager entre la collerette du corps formant butée et le bord arrière d'un plot de la bague d'accrochage, lorsque celle-ci est en position de verrouillage. Un tel cavalier n'est pas destiné à permettre le démontage d'un tube, mais au contraire d'assurer le blocage axial de la bague d'accrochage, dans la position verrouillée du tube. Ce verrouillage peut être intéressant dans le cas d'installation à risques ou dans le cas de sollicitation importante pouvant être exercée sur les tubes et sur les raccords.

Pour réaliser le démontage du raccord il convient d'enlever ce cavalier, de déplacer axialement la bague d'accrochage du côté de l'intérieur du raccord, puis d'utiliser le premier type de cavalier pour bloquer axialement la bague d'accrochage en position reculée, c'est-à-dire dans une position permettant le retrait du tube.

Selon une autre possibilité, l'outil destiné à agir à travers la fenêtre sur la bague d'accrochage est constitué par un cavalier destiné à venir entourer au moins partiellement la coiffe et comportant un doigt tourné vers l'intérieur susceptible de prendre une première position dans laquelle le doigt s'engage contre l'épaulement de la bande d'accrochage et le bord de la fenêtre situé du côté de l'extrémité libre du raccord et une deuxième position dans laquelle le doigt s'engage entre la collerette du corps formant butée et le bord arrière d'un plot de la bague d'accrochage, lorsque celle-ci est en position de verrouillage.

De toute façon, l'invention sera bien comprise à l'aide de la description qui suit, en référence au dessin schématique annexé représentant, à titre d'exemple non limitatif, une forme d'exécution de ce raccord :
Figure 1 est une vue en perspective d'un raccord pour deux tubes ;
Figure 2 est une vue en perspective d'une bague d'accrochage ;
Figure 3 est une vue en coupe longitudinale du raccord de figure 1, deux tubes étant engagés dans le raccord, dont l'un est en position verrouillée et l'autre est en position déverrouillée ;
Figure 4 est une vue en perspective d'un cavalier destiné à assurer le blocage axial d'une bague d'accrochage en position de libération d'un tube ;
Figure 5 est une vue en coupe du raccord de figure 1 dont l'une des bagues d'accrochage est équipée du cavalier de figure 4 ;
Figure 6 est une vue en perspective d'un cavalier destiné à assurer le blocage axial d'une bague d'accrochage en position verrouillée d'un tube ;
Figure 7 est une vue en coupe longitudinale du raccord de figure 1 équipé d'un cavalier de figure 6.
Figures 8 et 9 sont des vues en coupe longitudinale du raccord de la figure 1 équipé d'un cavalier assurant respectivement le blocage axial d'une bague d'accrochage et le blocage axial d'une bague d'accrochage en position verrouillée d'un tube.

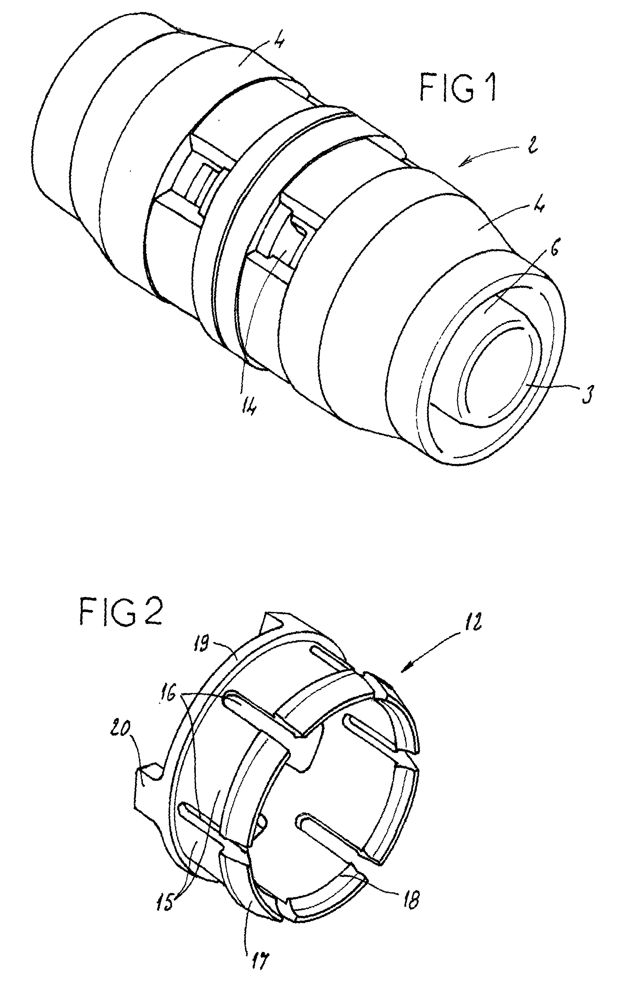

La figure 1 représente un raccord 2 pour deux tubes comprenant un corps 3 sur lequel est engagée une coiffe 4. Le corps comprend, pour chaque tube à raccorder 5 une partie tubulaire 6 de section correspondante au diamètre intérieur du tube, dans laquelle est ménagée une gorge 7 servant au logement d'un joint 8 destiné à assurer l'étanchéité avec l'intérieur du tube. Une collerette 9 est destinée à servir de butée à l'extrémité de chaque tube lors de l'introduction de celui-ci sur la partie tubulaire correspondante. La coiffe 4 délimite avec le corps 3, et du côté de chaque tube une chambre 10 servant au logement d'une bague d'accrochage 12. Chaque chambre 10 comprend une partie annulaire, de section constante se rétrécissant du côté de l'extrémité libre du raccord par une surface 13 inclinée de l'extérieur vers l'intérieur et depuis le centre du raccord vers l'extrémité de celui-ci. La coiffe 4 comporte également, à partir de chaque collerette 9, une série de fenêtres 14 ménagées sur sa périphérie. Chaque bague d'accrochage 12 comprend un corps cylindrique à partir duquel s'étendent axialement plusieurs dents 15 séparées les unes des autres par des fentes 16, chaque dent comportant à son extrémité libre, d'une part une face extérieure 17 inclinée de l'extérieur vers l'intérieur et de l'arrière vers l'avant, destinée à coopérer avec une surface 13 d'une coiffe, et d'autre part, du côté intérieur, une arête 18 destinée à pénétrer dans la surface extérieure de la paroi du tube à raccorder. Le corps de la bague d'accrochage comporte un épaulement annulaire 19 continu ou non, à partir duquel s'étendent vers l'arrière des plots 20 destinés à venir prendre appui contre une collerette 9 du corps.

Chaque fenêtre ménagée dans la coiffe s'étend axialement, sensiblement depuis une collerette 9 du corps 3 jusqu'au-delà de l'épaulement de la bague d'accrochage, lorsque les plots de celle-ci sont en appui contre la collerette.

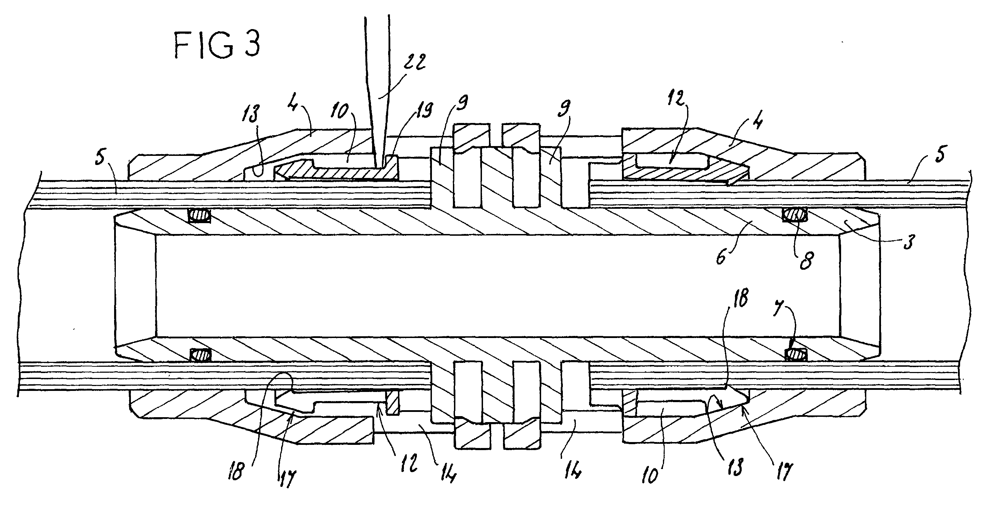

D'un point de vue pratique, lorsqu'un tube 5 est engagé dans le raccord, il pénètre dans celui-ci jusqu'à ce que son extrémité vienne en appui contre une collerette 9. Lorsque l'on retire légèrement le tube 5 vers l'extérieur, les arêtes 18 de la bague d'accrochage 12 correspondante pénètre dans la surface extérieure de la paroi du tube et la bague d'accrochage 12 accompagne le mouvement du tube, sa surface inclinée 17 venant en appui contre la surface inclinée de la coiffe 4, provoquant un rapprochement des dents 15 et par suite d'une pénétration plus importante des arêtes 18 dans le tube, empêchant tout retrait de celui-ci. Cette position de verrouillage d'un tube est représentée dans la partie droite de la figure 3.

Pour retirer un tube, il convient de repousser celui-ci jusqu'à ce que l'extrémité du tube revienne en butée contre une collerette 9, comme représenté à la partie gauche de la figure 3. La bague d'accrochage 12 correspondante revient avec le tube. Il est alors possible d'introduire un outil 22 à travers une fenêtre 14 pour que l'outil soit engagé derrière l'épaulement 19, entre celui-ci et le bord de la fenêtre située du côté de l'extrémité correspondante du raccord. Il est alors possible de retirer le tube sans que la bague d'accrochage n'accompagne le mouvement du tube et retienne celui-ci.

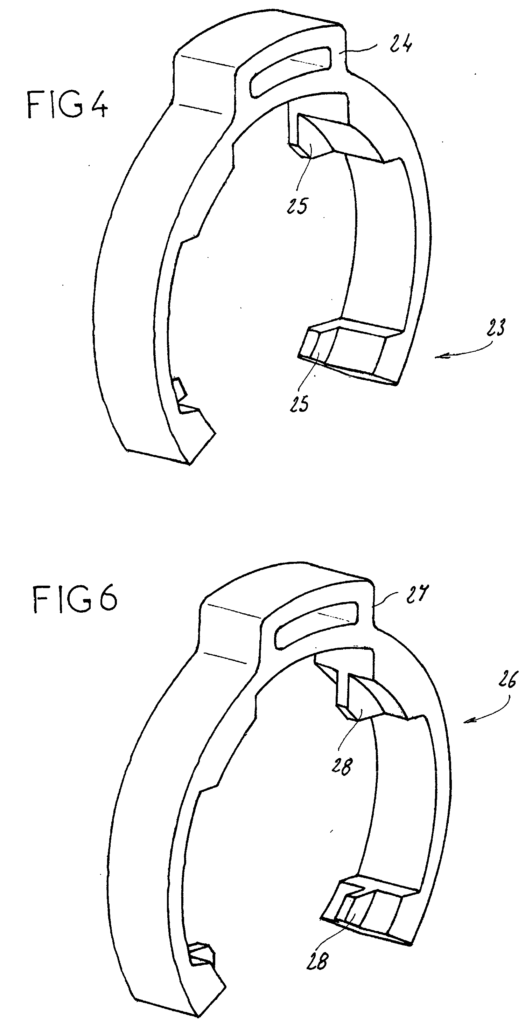

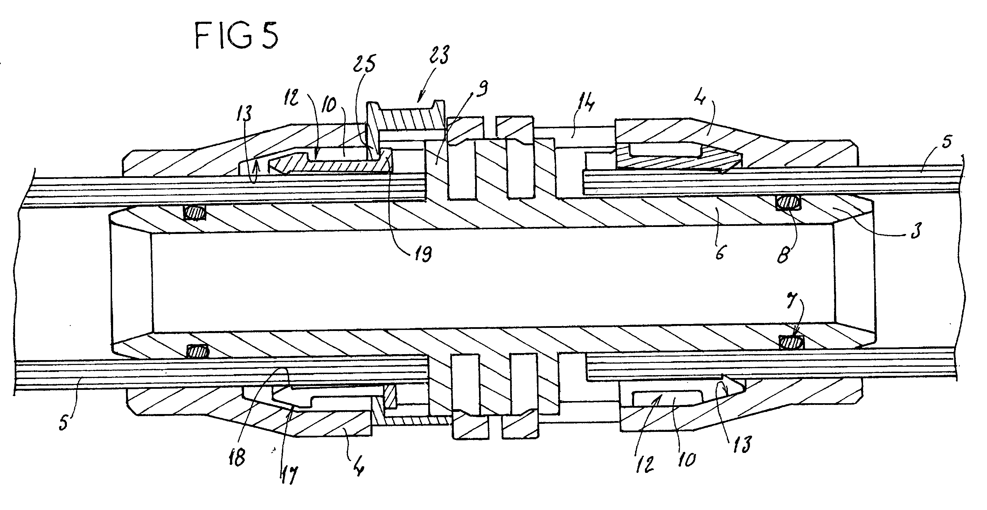

Les figures 4 et 5 représentent un outil adapté pour immobiliser axialement une bague d'accrochage 12 lors du retrait d'un tube. Cet outil est constitué par un cavalier 23 en matière synthétique élastiquement déformable, comportant une palette de manutention 24, à partir de laquelle s'étendent deux branches arrondies. Les branches portent au moins un doigt 25 tourné radialement vers l'intérieur et destiné à venir s'engager entre l'épaulement 19 de la bague d'accrochage et le bord de la fenêtre situé du côté libre du raccord, comme montré à la figure 5.

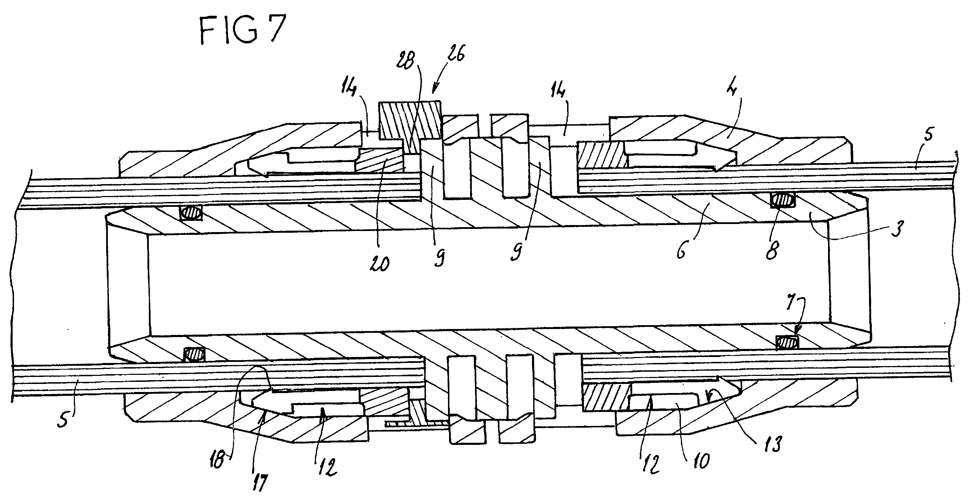

Les figures 6 et 7 représentent un autre outil destiné à immobiliser une bague d'accrochage en position verrouillée d'un tube. Cet outil est constitué par un cavalier 26 réalisé en une matière synthétique déformable élastiquement. Ce cavalier 26 comprend une palette de manutention 27 à partir de laquelle s'étendent deux branches arrondies dont chacune porte au moins un doigt 28 dirigé radialement vers l'intérieur et destiné à pénétrer dans une fenêtre 14 pour s'engager entre la collerette 9 du corps formant butée et le bord arrière d'un plot de la bague d'accrochage, ou l'épaulement de cette même bague. Il n'est ainsi pas possible de repousser le tube vers l'intérieur du raccord pour permettre son retrait hors du tube.

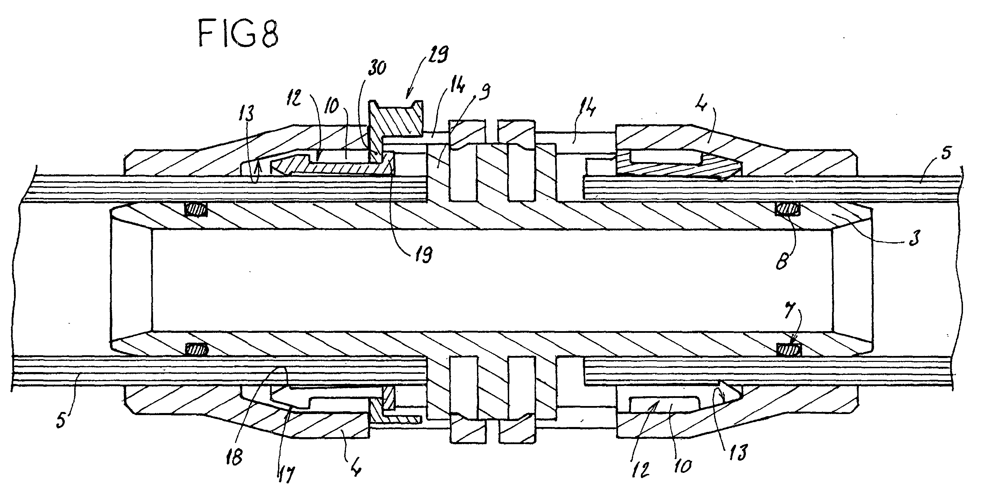

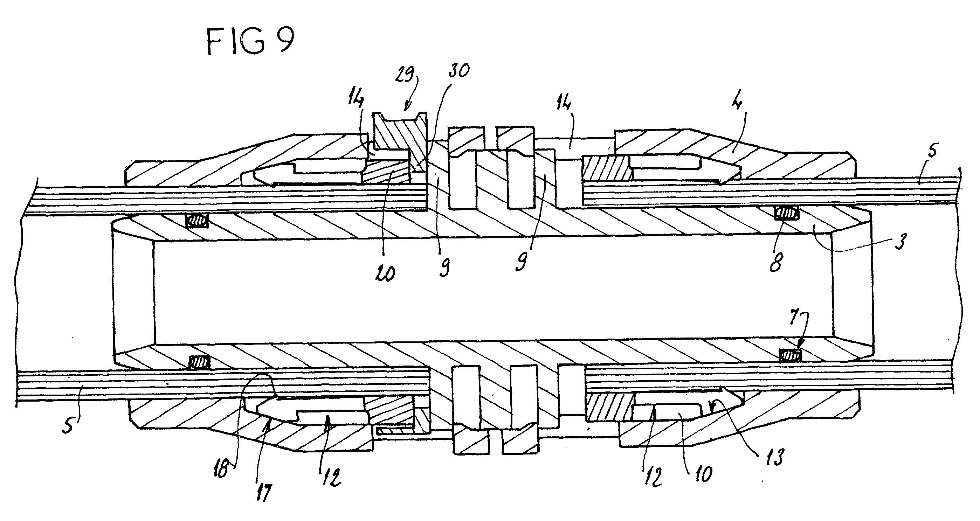

Les figures 8 et 9 représentent un autre outil. Cet outil est constitué par un cavalier 29 réalisé en matière synthétique déformable élastiquement. Le cavalier 29 dont la structure est similaire à celle des cavaliers 23 et 26 comprend une palette de manutention à partir de laquelle s'étendant deux hanches arrondies dont chacune porte au moins un doigt 30 dirigé radialement vers l'intérieur.

Le cavalier 29 présente une double fonction. En effet, comme le montre la figure 8, le doigt 30 vient s'engager entre l'épaulement 19 de la bague d'accrochage et le bord de la fenêtre situé du côté libre du raccord. La bague d'accrochage 12 est ainsi immobilisée lors du retrait d'un tube. Comme le montre la figure 9, le même cavalier 29 peut être retourné de telle sorte que le doigt 30 pénètre dans la fenêtre 14 pour s'engager entre la collerette 9 et le bord arrière d'un plot de la bague d'accrochage, ou l'épaulement de cette même bague. La bague d'accrochage est ainsi immobilisée en position verrouillée d'un tube.

Comme il ressort de ce qui précède l'invention apporte une grande amélioration à la technique existante en fournissant un raccord instantané démontable de structure très simple, réalisé de façon économique à partir d'un faible nombre de pièces, et d'une utilisation très pratique pour l'opérateur, permettant de maintenir la ou les bagues d'accrochage en position non verrouillée pour procéder à des montages blancs, ou pour démonter le raccord, et de verrouiller et de maintenir les tubes en position verrouillée, lorsque besoin est.

## Revendications

1. Raccord instantané démontable pour au moins un tube (5), notamment un tube en matériau thermoplastique ou en matériau composite, comprenant une âme métallique, par exemple en aluminium, revêtue de couches de matière synthétique, par exemple de polyéthylène réticulé, comprenant :
- un corps rigide (3) comportant, pour le raccordement de chaque tube, une partie tubulaire (6) de diamètre correspondant au diamètre intérieur du tube (5), dans laquelle est ménagée au moins une gorge périphérique (7) servant de logement à un joint (8) destiné à assurer l'étanchéité avec l'intérieur du tube, et une collerette (9) destinée à servir de butée à l'extrémité du tube (5) lors de l'introduction de celui-ci sur la partie tubulaire (6),
- une coiffe (4) de diamètre intérieur correspondant au diamètre extérieur du tube (5), montée sur la partie tubulaire du corps et délimitant avec celle-ci une chambre (10) servant au logement d'une bague d'accrochage (12) du tube, contrainte vers la position d'accrochage lors d'un déplacement du tube dans le sens de dégagement hors du raccord, la coiffe (4) présentant au niveau de chaque bague d'accrochage (12) au moins une fenêtre (14) permettant le passage d'un outil (22) agissant sur la bague (12) pour l'immobiliser axialement en position de manipulation du tube (5), c'est-à-dire lors du montage ou du démontage du tube, ou pour l'immobiliser en position montée, chaque bague d'accrochage (12) comprenant en outre un corps cylindrique à partir duquel s'étendant axialement plusieurs dents (15) séparées les unes des autres par des fentes (16), chaque dent (15) comportant, à son extrémité libre, d'une part une face extérieure (17) inclinée de l'extérieur vers l'intérieur et de l'arrière vers l'avant, destinée à coopérer avec une surface (13) d'inclinaison complémentaire de la coiffe (4), et d'autre part, du côté intérieur, au moins une arête (18) destinée à pénétrer dans la surface extérieure de la paroi du tube à raccorder, **caractérisé en ce que** le corps de la bague d'accrochage (12) comporte un épaulement annulaire (19) à partir duquel s'étendent vers l'arrière des plots (20) destinés à venir prendre appui contre la collerette (9) du corps.

2. Raccord instantané selon la revendication 1, **caractérisé en ce que** chaque fenêtre (14) ménagée dans la coiffe (4) s'étend axialement sensiblement depuis la collerette (9) du corps jusqu'au-delà de l'épaulement (19) de la bague d'accrochage (12), lorsque les plots de celle -ci sont en appui contre la collerette (9).

3. Raccord instantané selon l'une des revendications 1 et 2, **caractérisé en ce que** l'outil (22) destiné à agir à travers une fenêtre (14) sur la bague d'accrochage (12) est un outil extérieur tel qu'un tournevis dont l'extrémité prend appui contre l'épaulement annulaire (19), pour agir sur la bague d'accrochage (12).

4. Raccord instantané selon l'une des revendications 1 et 2, **caractérisé en ce que** l'outil destiné à agir à travers une fenêtre (14) sur la bague d'accrochage (12) est constitué par un cavalier (23) destiné à venir entourer au moins partiellement la coiffe (4) et comportant un doigt (25) tourné vers l'intérieur, pénétrant dans une fenêtre (14) pour s'engager entre l'épaulement (19) de la bague d'accrochage (12) et le bord de la fenêtre (14) situé du côté de l'extrémité libre du raccord.

5. Raccord instantané selon l'une des revendications 1 et 2, **caractérisé en ce que** l'outil destiné à agir à travers une fenêtre (14) sur la bague d'accrochage (12) est constitué par un cavalier (26) destiné à venir entourer au moins partiellement la coiffe (4) et comportant un doigt (28) tourné vers l'intérieur, pénétrant dans une fenêtre (14) pour s'engager entre la collerette (9) du corps (3) formant butée et le bord arrière d'un plot (20) de la bague d'accrochage (12), lorsque celle-ci est en position de verrouillage.

6. Raccord instantané selon l'une des revendications 1 et 2, **caractérisé en ce que** l'outil destiné à agir à travers la fenêtre (14) sur la bague d'accrochage (12) est constitué par un cavalier (29) destiné à venir entourer au moins partiellement la coiffe (4) et comportant un doigt (30) tourné vers l'intérieur susceptible de prendre une première position dans laquelle le doigt (30) s'engage contre l'épaulement (19) de la bague d'accrochage (12) et le bord de la fenêtre (14) situé du côté de l'extrémité libre du raccord et une deuxième position dans laquelle le doigt (30) s'engage entre la collerette (9) du corps (3) formant butée et le bord arrière d'un plot (20) de la bague d'accrochage (12), lorsque celle-ci est en position de verrouillage.

7. Raccord instantané selon l'une des revendications 4 à 6, **caractérisé en ce que** chaque cavalier (23, 26) est réalisé en matière synthétique déformable élastiquement pour permettre sa mise en place et son retrait vis à vis de la coiffe.

## Claims

1. Detachable instantaneous connection for at least one pipe (5), in particular a pipe made of thermoplastic material or a composite material, comprising a metal core, which for example is made of aluminium, covered with layers of synthetic material, for example cross-linked polyethylene, comprising:
- a rigid body (3), comprising for the connection of each pipe a tubular part (6) with a diameter corresponding to the inner diameter of the pipe (5), in which there is provided at least one peripheral groove (7) which acts as a receptacle for a seal (8) which is designed to assure the sealing relative with the interior of the pipe, and a collar (9) which is designed to act as a stop at the end of the pipe (5) during introduction of the latter onto the tubular part (6);
- a cap (4) with an inner diameter which corresponds to the outer diameter of the pipe (5) is fitted on the tubular part of the body, and delimits together with the latter a chamber (10) which acts as a receptacle for a locking ring (12) for the pipe, which ring is thrust towards the locking position during displacement of the pipe in the direction of release from the connection, the cap (4) having at each locking ring (12) at least one window (14) which permits passage of a tool (22) which acts on the ring (12) in order to immobilise the latter axially in the position of manipulation of the pipe (5), i.e. during fitting or detachment of the pipe, or in order to immobilise the ring in the fitted position, each locking ring (12) additionally comprising a cylindrical body from which there extends axially a plurality of teeth (15), which are separated from one another by slots (16), each tooth (15) comprising on its free end firstly an outer surface (17) which is inclined from the exterior towards the interior, and from the rear towards the front, and is designed to co-operate with a complementary inclination surface (13) of the cap (4), and secondly, on the inner side, at least one ridge (18), which is designed to penetrate in the outer surface of the wall of the pipe to be connected, **characterised in that** the body of the locking ring (12) comprises an annular shoulder (19), from which there extend rearwards lugs (20) which are designed to be supported against the collar (9) of the body.

2. Instantaneous connection according to claim 1, **characterised in that** each window (14) which is provided in the cap (4) extends axially, substantially from the collar (9) of the body to beyond the shoulder (19) of the locking ring (12), when the lugs of the latter are supported against the collar (9).

3. Instantaneous connection according to claim 1 or claim 2, **characterised in that** the tool (22) which is designed to act through a window (14) on the locking ring (12) is an external tool such as a screwdriver, the end of which is supported against the annular shoulder (19) in order to act on the locking ring (12).

4. Instantaneous connection according to claim 1 or claim 2, **characterised in that** the tool which is designed to act through a window (14) on the locking ring (12) consists of a clamp (23) which is designed to surround the cap (4) at least partially, and comprises a finger (25) which faces towards the interior, and penetrates in a window (14) in order to engage between the shoulder (19) of the locking ring (12) and the edge of the window (14) which is situated on the free end side of the connection.

5. Instantaneous connection according to claim 1 or claim 2, **characterised in that** the tool which is designed to act through a window (14) on the locking ring (12) consists of a clamp (26) which is designed to surround the cap (4) at least partially, and comprises a finger (28) which faces towards the interior, and penetrates in a window (14) in order to engage between the collar (9) of the body (3) which forms a stop and the rear edge of a lug (20) of the locking ring (12), when the latter is in the locking position.

6. Instantaneous connection according to claim 1 or claim 2, **characterised in that** the tool which is designed to act through the window (14) on the locking ring (12) consists of a clamp (29) which is designed to surround the cap (4) at least partially, and comprises a finger (30) which faces towards the interior, and can assume a first position in which the finger (30) engages against the shoulder (19) of the locking ring (12) and the edge of the window (14) which is situated on the free end side of the connection, and a second position in which the finger (30) engages between the collar (9) of the body (3) which forms a stop and the rear edge of a lug (20) of the locking ring (12), when the latter is in the locking position.

7. Instantaneous connection according to any one of claims 4 to 6, **characterised in that** each clamp (23, 26) is made of synthetic material which is deformable resiliently, in order to allow it to be put into place on the cap and removed from the latter.

## Patentansprüche

1. Abnehmbare Schnellkupplung für mindestens ein Rohr (5), insbesondere ein Rohr aus einem thermoplastischen Material oder aus einem Verbundmaterial mit einem Metallkern, z.B. aus Aluminium, der mit Schichten aus synthetischem Material, wie z.B. vernetztem Polyethylen beschichtet ist, wobei die Schnellkupplung folgendes aufweist:
- einen starren Körper (3), der zum Ankoppeln eines jeden Rohres einen rohrförmigen Bereich (6), dessen Durchmesser dem Innendurchmesser des Rohres (5) entspricht und in dem mindestens eine umfangsmäßige Nut (7) vorgesehen ist, welche als Aufnahme für eine Dichtung (8) dient, die zum Herstellen der Dichtigkeit mit dem Inneren des Rohres vorgesehen ist, sowie einen Bund (9) aufweist, der dazu vorgesehen ist, als Anschlag für das Ende des Rohres (5) bei dessen Aufschieben auf den rohrförmigen Bereich (6) zu dienen,
- eine Kappe (4) mit einem Innendurchmesser, der dem Außendurchmesser des Rohres (5) entspricht, welche auf dem rohrförmigen Bereich des Körpers montiert ist und mit diesem eine Kammer (10) begrenzt, welche zum Aufnehmen eines Einhakrings (12) des Rohres dient, der bei einer Verschiebung des Rohres in der Richtung des Ablösens von der Kupplung in die eingehakte Position geschoben wird, wobei die Kappe (4) auf der Höhe jedes Einhakrings (12) mindestens eine Aussparung (14) aufweist, welche das Hindurchführen eines Werkzeugs (22) ermöglicht, das auf den Ring (12) einwirkt, um ihn in der Handhabungsposition des Rohres (5), d.h. bei der Montage oder der Demontage des Rohres, axial festzuhalten, oder um ihn in der Anbringungsposition festzuhalten, wobei jeder Einhakring (12) ferner einen zylindrischen Körper aufweist, von dem sich in Axialrichtung mehrere Zähne (15) erstrecken, die durch Schlitze (16) voneinander getrennt sind, wobei jeder Zahn (15) an seinem freien Ende zum einen eine von außen nach innen sowie von hinten nach vorn geneigte Außenfläche (17) aufweist, die dazu vorgesehen ist, mit einer dazu komplementären geneigten Fläche (13) der Kappe (4) zusammenzuwirken, und zum anderen auf der Innenseite mindestens eine Kante (18) aufweist, die dazu vorgesehen ist, in die Außenseite der Wandung des anzuschließenden Rohres einzudringen,
**dadurch gekennzeichnet,**
**daß** der Körper des Einhakrings (12) eine Ringschulter (19) aufweist, von der sich Ansätze (20) nach hinten erstrecken, die dazu vorgesehen sind, sich gegen den Bund (9) des Körpers abzustützen.

2. Schnellkupplung nach Anspruch 1,
**dadurch gekennzeichnet,**
**daß** jede in der Kappe (4) vorgesehene Aussparung (14) sich in Axialrichtung im wesentlichen von dem Bund (9) des Körpers bis über die Schulter (19) des Einhakrings (12) hinaus erstreckt, wenn dessen Ansätze am Bund (9) anliegen.

3. Schnellkupplung nach einem der Ansprüche 1 und 2,
**dadurch gekennzeichnet,**
**daß** das Werkzeug (22), das dazu vorgesehen ist, durch eine Aussparung (14) auf den Einhakring (12) einzuwirken, ein externes Werkzeug, wie etwa ein Schraubendreher ist, dessen Ende sich auf der Ringschulter (19) abstützt, um auf den Einhakring (12) einzuwirken.

4. Schnellkupplung nach einem der Ansprüche 1 und 2,
**dadurch gekennzeichnet,**
**daß** das Werkzeug, das dazu vorgesehen ist, durch eine Aussparung (14) auf den Einhakring (12) einzuwirken, aus einem Bügel (23) besteht, der dazu vorgesehen ist, die Kappe (4) zumindest teilweise zu umgeben, und eine zur Innenseite hin gerichtete Nase (25) aufweist, die eine Aussparung (14) durchsetzt, so daß sie zwischen die Schulter (19) des Einhakrings (12) und den Rand der auf der Seite des freien Endes der Kupplung gelegenen Aussparung (14) eingreift.

5. Schnellkupplung nach einem der Ansprüche 1 und 2,
**dadurch gekennzeichnet,**
**daß** das Werkzeug, das dazu vorgesehen ist, durch eine Aussparung (14) auf den Einhakring (12) einzuwirken, aus einem Bügel (26) besteht, der dazu vorgesehen ist, die Kappe (4) zumindest teilweise zu umgeben, und eine zur Innenseite hin gerichtete Nase (28) aufweist, die eine Aussparung (14) durchsetzt, so daß sie zwischen dem einen Anschlag darstellenden Bund (9) des Körpers (3) und dem hinteren Rand eines Ansatzes (20) des Einhakrings (12) eingreift, wenn dieser sich in der Verriegelungsposition befindet.

6. Schnellkupplung nach einem der Ansprüche 1 und 2,
**dadurch gekennzeichnet,**
**daß** das Werkzeug, das dazu vorgesehen ist, durch eine Aussparung (14) auf den Einhakring (12) einzuwirken, aus einem Bügel (29) besteht, der dazu vorgesehen ist, die Kappe (4) zumindest teilweise zu umgeben, und eine zur Innenseite hin gerichtete Nase (30) aufweist, welche in der Lage ist, eine erste Position einzunehmen, in welcher die Nase (30) gegen die Schulter (19) des Einhakrings (12) und den Rand der auf der Seite des freien Endes des Kupplung gelegenen Aussparung (14) anliegt, und eine zweite Position einzunehmen, in welcher die Nase (30) zwischen dem einen Anschlag bildenden Bund (9) des Körpers (3) und dem hinteren Rand eines Ansatz (20) des Einhakrings (12) eingreift, wenn dieser sich in der Verriegelungsposition befindet.

7. Schnellkupplung nach einem der Ansprüche 4 bis 6,
**dadurch gekennzeichnet,**
**daß** jeder Bügel (23, 26) aus einem elastisch verformbaren Material hergestellt ist, um seine Anbringung und sein Abnehmen bezogen auf die Kappe zu ermöglichen.
